# FASCICULE DE BREVET EUROPEEN

(11) **EP 2 490 908 B1**
(45) Date de publication et mention de la délivrance du brevet: **07.01.2015**
(21) Numéro de dépôt: 10773654.8
(22) Date de dépôt: 28.09.2010
(51) Int. Cl.: B60J 10/00, B60J 10/04

(54) **MODULE D'ETANCHEITE ET ENSEMBLE FORME DUDIT MODULE D'ETANCHEITE ET D'UNE PORTE, VEHICULE COMPORTANT UN TEL ENSEMBLE.**
ABDICHTMODUL, ANORDNUNG AUS BESAGTEM MODUL UND TÜR SOWIE FAHRZEUG MIT SOLCH EINER ANORDNUNG
SEALING MODULE, ASSEMBLY FORMED OF SAID SEALING MODULE AND A DOOR, AND VEHICLE COMPRISING SUCH AN ASSEMBLY

(30) Priorité: 19.10.2009 FR 0957306
(43) Date de publication de la demande: 29.08.2012
(73) Titulaire: PEUGEOT CITROËN AUTOMOBILES SA, 78140 Velizy-Villacoublay (FR)
(72) Inventeur: PIERSON, Patrick, F-70110 Senargent - Mignafans (FR); BAGOUIN, Elisabeth, F-90300 Offemont (FR)
(74) Mandataire: Fernandez, Francis Lionel
(86) Numéro de dépôt international: PCT/FR2010/052039
(87) Numéro de publication internationale: WO 2011/048296

(56) Documents cités:
- DE-A1- 10 330 206
- DE-A1- 19 961 873
- US-B1- 6 189 951

## Description

La présente invention concerne un module d'étanchéité, un ensemble formé dudit module d'étanchéité et d'une porte, ainsi qu'un véhicule comportant un tel ensemble.

L'invention concerne plus particulièrement un module d'étanchéité comprenant au moins un ensemble d'éléments d'étanchéité.

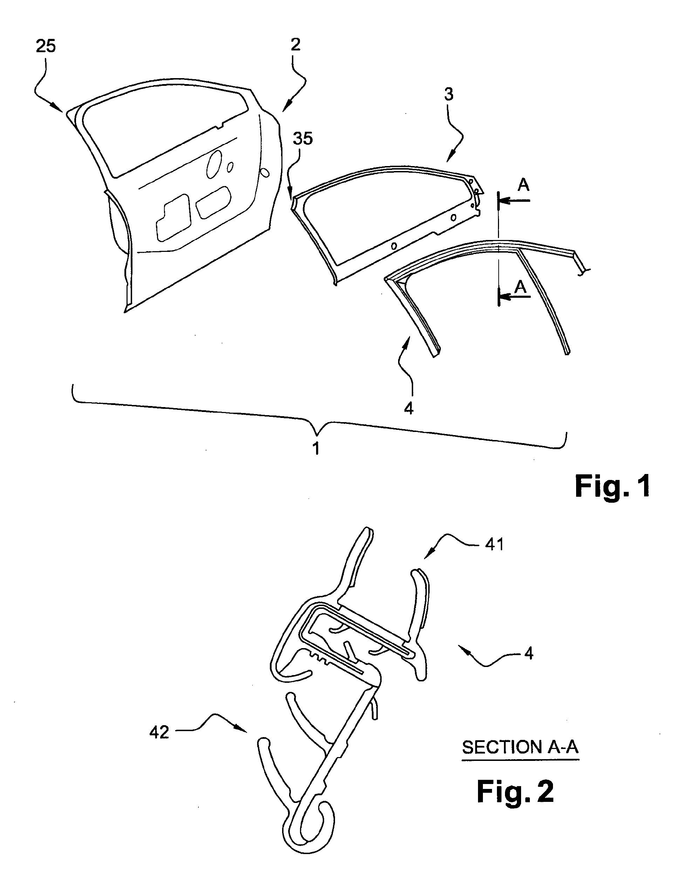

La structure d'une porte connue de véhicule automobile, dont une représentation est donnée en figure 1, comprend une première pièce de tôlerie que l'on qualifie de doublure 2 de porte 1, et un cadre supérieur 3 apte à être rapporté sur le côté extérieur de la doublure 2 de porte.

Une porte comportant une telle structure a l'avantage d'utiliser des pièces de tôleries de nuances différentes, ce qui est avantageux en termes de rigidité.

Dans un but de réduction des coûts de fabrication, le nombre d'opération d'emboutissage est réduit à son juste nécessaire ce qui implique de nouvelles mises en forme de pièces. A titre d'exemple, l'étape d'emboutissage du coin supérieur 35 du cadre 3 est n'est pas réalisé, ce qui implique une découpe du coin supérieur 35.

Le coin supérieur 35 du cadre supérieur 3 est par conséquent différent dans sa réalisation par rapport au coin supérieur 25 de la doublure 2 de porte que le cadre recouvre par superposition, après leur assemblage.

Il est connu qu'une porte 1 soit équipée d'un module 4 d'étanchéité regroupant des fonctions telle que par exemple l'étanchéité de la porte par rapport à la caisse du véhicule, ou l'étanchéité d'un fenestron fixe rapporté sur la porte, ou encore l'étanchéité d'un ouvrant par rapport à la structure de a porte.

Un tel module 4 est une pièce complexe dans sa conception, comme en atteste la figure 2 qui représente selon une vue en coupe de la coulisse selon l'axe de coupe A-A de la figure 1. Il comprend un joint périphérique externe 41 dédié à l'étanchéité de la porte par rapport à la caisse, une coulisse 42 dédiée à l'étanchéité de l'ouvrant par rapport à la structure de porte et prolongée d'un joint intérieur dédié à l'étanchéité du fenestron par rapport à la structure de la porte le cas échéant.

Un tel module est monté sur des feuillures formées par la doublure 2 de la porte et par le cadre supérieur 3, de telle manière qu'il vient à recouvrement de la face extérieure du cadre 3.

La Demanderesse a constaté qu'en l'absence de coin supérieur 35 sur le cadre supérieur 3, le déplacement de l'ouvrant le long de la coulisse 42 dudit module 4 engendre des déformations localisées du module 4 qui sont néfastes en termes de tenue de la liaison avec la structure de la porte. Ce phénomène est d'autant plus prononcée que le coin supérieur de porte est soumis, durant la fermeture de la porte, à des efforts s'opposant au maintien du module 4, c'est-à-dire à des efforts orientés vers l'extérieur de la porte.

Le document US 6, 189, 951 décrit le préambule de la revendication 1.

Un but de la présente invention est de pallier tout ou partie des inconvénients de l'art antérieur relevés ci-dessus.

A cette fin, le module d'étanchéité selon l'invention, par ailleurs conforme à la définition générique qu'en donne le préambule ci-dessus, est essentiellement caractérisé en ce qu'il comprend un moyen de fixation dudit module d'étanchéité situé au niveau d'un coin défini par la jonction de tout ou partie des éléments d'étanchéité convergeant l'un vers l'autre.

Une telle conception permet de répondre efficacement au problème de fixation du module d'étanchéité en proposant un agencement efficace d'un moyen de fixation par rapport au défaut de tenue dans la fixation de ce dernier.

Par ailleurs, le module d'étanchéité comprend une embase formant une partie dudit coin, et un insert destiné à la fixation dudit module d'étanchéité sur un support dédié, ledit insert comprenant une entretoise en saillie de laquelle s'étend axialement un fût d'indexage par rapport audit support dédié et radialement une branche reliant l'entretoise à l'embase ; ce qui permet de positionner convenablement l'insert par rapport à l'embase dans le procédé de fabrication, voire de recourir rapidement et à moindre coût à tout correctif en cas de mauvais alignement ;

Par ailleurs, le module d'étanchéité selon l'invention peut comporter l'une ou plusieurs des caractéristiques suivantes :
- le fût est disposé sur une face de l'insert à l'opposée de laquelle s'étend ladite branche ; ce qui permet avantageusement de compenser certains défauts de conception du fût par une déformation élastique de la branche ;
- le fût est cylindrique et s'étend radialement en retrait par rapport au bord périphérique de l'entretoise ; ce qui créé une surface annulaire d'appui permettant à l'entretoise une répartition homogène des efforts de fixation ;
- il comprend au moins élément d'aspect relié à l'un ou à chacun des éléments d'étanchéité, l'élément d'aspect étant relié à l'insert au moyen d'une vis de serrage s'étendant au travers d'une ouverture ménagée dans le fût et l'entretoise ; ce qui permet, outre l'indexage du module d'étanchéité, de créer un moyen de fixation supplémentaire sur lequel un élément d'aspect est apte à être assemblé ;
- l'embase comprend deux brins convergeant l'un vers l'autre, et définissant un sommet à partir duquel s'étend l'insert ; ce qui forme un agencement optimal de l'insert entre les éléments d'étanchéité, permettant d'améliorer la fixation de chacun des éléments d'étanchéité lorsque ceux-ci sont soumis à des efforts s'opposant à l'effort de maintien.

Par ailleurs, l'invention à trait à un ensemble comportant un module d'étanchéité comprenant tout ou partie des caractéristiques susmentionnées et une structure de porte d'un véhicule, notamment d'une automobile, caractérisé en ce que ledit ensemble comprend au moins un ouvrant fixe ou mobile par rapport à un encadrement d'ouvrant délimité par la structure de porte, ledit module d'étanchéité comprenant au moins un joint à lèvre apte à être disposée sur un bord périphérique de la porte pour rendre hermétique ce dernier par rapport à la caisse du véhicule, au moins une coulisse apte à être montée sur tout ou partie dudit encadrement d'ouvrant, et destinée à la fixation d'au moins un ouvrant pour rendre hermétique chaque ouvrant par rapport audit encadrement, chaque joint à lèvre et chaque coulisse étant reliés à l'embase fixée sur un support dédié du type d'une doublure de porte.

Un tel ensemble est plus robuste en termes de tenue, donc de qualité perçue. En opérant la fixation du module d'étanchéité sur la doublure de porte, cela contraint d'autres parties du module d'étanchéité à venir en appui sur d'autres parties de la structure de porte, ce qui améliore par adhérence encore plus la tenue du module d'étanchéité sur la structure de porte.

De préférence, l'ensemble selon l'invention se caractérise en ce que la structure de porte comprend une doublure de porte et un cadre supérieur de porte, chacun délimitant tout ou partie d'un encadrement d'au moins un ouvrant, le cadre supérieur étant superposé à la doublure de porte de telle sorte que la face intérieure dudit cadre supérieure est disposée sur la face extérieure de la doublure de porte, ledit module d'étanchéité étant fixé sur les feuillures de la doublure de porte et du cadre supérieur en recouvrant la face extérieure dudit cadre supérieur.

La fixation du module d'étanchéité sur la doublure de porte est remarquable en termes de qualité d'assemblage, puisque la doublure de porte est réalisée à partir d'une pièce de tôlerie de grande résistance à la déformation.

De préférence encore, l'ensemble se caractérise aussi par le fait que la doublure de porte comprend, au niveau d'une zone destinée à recevoir l'embase délimitant un coin dudit module d'étanchéité, un trou dans lequel s'étend le fût du module d'étanchéité.

Le moyen de fixation et d'indexage formé par le trou pratiqué dans la doublure de porte, une vis de serrage et l'entretoise du module d'étanchéité, permet une disposition du module d'étanchéité au plus juste, c'est-à-dire avec peu de jeux de montage, ce qui est gage de qualité.

De préférence encore, l'ensemble se caractérise en ce que l'entretoise est en appui contre une face extérieure de la doublure de porte et en ce qu'un élément d'aspect est un enjoliveur rapporté et vissé sur l'entretoise, laquelle est en appui sur une face opposée de la doublure de porte.

Un tel agencement de l'entretoise lui permet avantageusement d'oeuvrer en tant que butée de haut de porte, évitant les bruits de fermeture de la doublure de porte sur la caisse.

L'invention a aussi trait à un véhicule, notamment du type d'une automobile, comportant une porte montée articulée sur une caisse du véhicule, caractérisé en ce que la porte comprend un ensemble comportant l'une quelconque des caractéristiques précédentes.

D'autres avantages et particularités de l'invention ressortent de la description de modes de réalisation faite ci-après en référence aux dessins annexés dans lesquels :
- la figure 3 est une vue en coupe d'un coin de porte comportant un module d'étanchéité selon l'invention ;
- la figure 4 est une vue en perspective d'une embase dudit module d'étanchéité de l'invention, l'embase comportant un moyen de fixation ;
- la figure 5 représente en perspective et de façon schématique et partielle, des structures de portes avant et arrière vue de l'extérieur, plus particulièrement des coins supérieurs arrière et avant sur lesquels des modules d'étanchéité sont aptes à être montés, selon l'invention ;
- la figure 6 représente en perspective, de façon schématique et partielle, des parties de cadres supérieurs de portes avant et arrière formant une partie des structures de portes avant et arrière, vue de l'intérieure, plus particulièrement des coins supérieurs arrière et avant sur lesquels des modules d'étanchéité sont agencés, selon l'invention ;

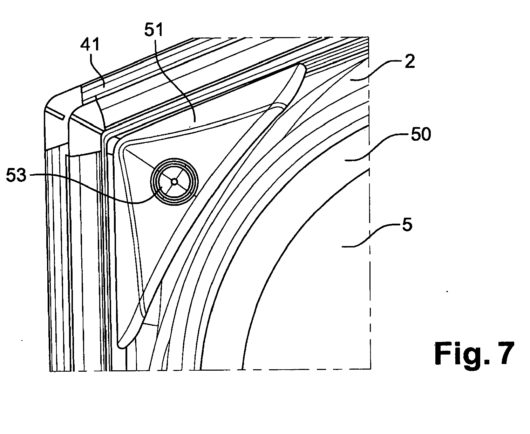

- la figure 7 représente en perspective de façon schématique et partielle, le coin arrière d'une porte avant, vue de l'intérieur, comportant le module d'étanchéité ainsi qu'un élément d'aspect recouvrant les moyens de fixation dudit module d'étanchéité sur la structure de porte, selon l'invention.

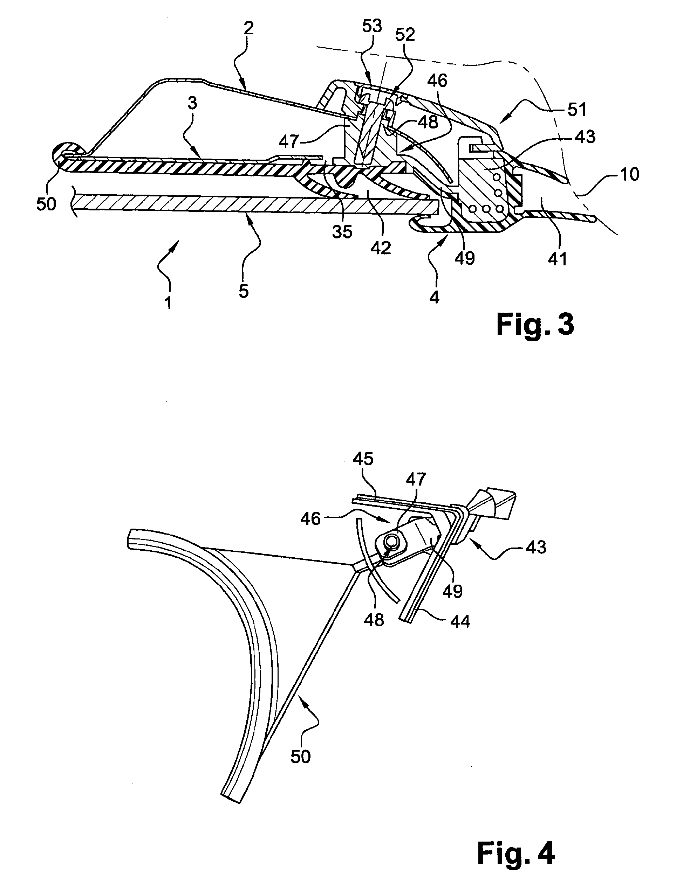

En se reportant à la figure 3, une porte 1 comprend un module 4 d'étanchéité visible depuis les côtés extérieur et intérieur.

La structure de porte 1 comprend une doublure 2 de porte recouverte par superposition partielle d'un cadre 3 supérieur.

La doublure 2 de porte est réalisée à partie d'une pièce de tôlerie dont le bord périphérie est délimité par une feuillure de tôle. Il en est de même du cadre 3 supérieur, dont la feuillure périphérique est jointe à la feuillure de la doublure 2.

La doublure 2 de porte et le cadre 3 supérieur délimitent une ouverture au travers de laquelle est monté au moins un ouvrant 5. L'un d'entre les ouvrants est monté mobile à coulissement entre des positions d'ouverture et de fermeture. L'autre d'entre les ouvrants est par exemple du type d'un fenestron disposé au niveau d'une partie avant de la porte avant ou d'une partie arrière de la porte arrière.

Chaque ouverture est délimitée par une feuillure de la doublure 2 de porte ou une feuillure du cadre 3 supérieur. Les feuillures sont reliées entre elles par soudage.

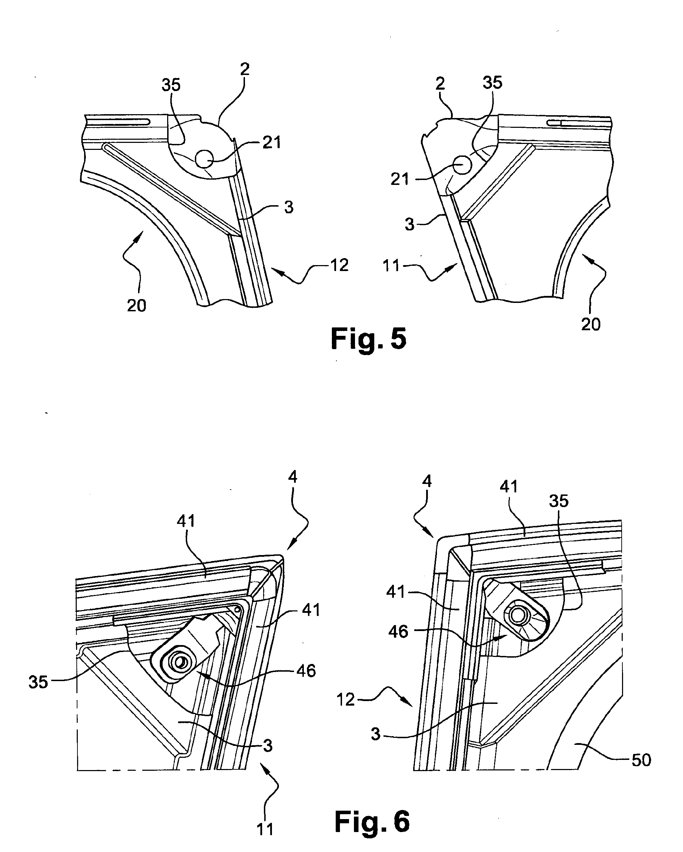

La doublure 2 de porte et le cadre 3 délimitent un corps creux dont l'un des parois est ouverte sur l'extérieur du fait notamment d'un coin biseauté de cadre 3, comme cela est rendu visible sur la figure 5.

Le cadre 3 s'étend par rapport à la doublure 2 à l'extérieur et est recouvert par une partie du module 4 d'étanchéité. Les feuillures extérieures et intérieures de la porte, associées au bord périphérique extérieur de porte et au bord de l'ouverture pour l'ouvrant, servent respectivement de moyens de support à un élément d'étanchéité du type d'un joint 41 à lèvres et du type d'une coulisse 42 sur laquelle l'ouvrant 5 est monté à coulissement.

Le module 4 d'étanchéité comprend une embase 43 rigide obtenue par moulage, qui est une pièce importante du module 4 d'étanchéité étant donné qu'elle assure la liaison des éléments d'étanchéité entre eux en formant une armature apte à recevoir ceux-ci, mais aussi délimite de par sa forme générale sensiblement triangulaire, un coin du module 4 d'étanchéité.

L'embase 43 comprend également un élément d'aspect 50, qualifié parfois de vignette, qui se compose d'une portion sensiblement en forme d'arc de cercle définissant la base d'une cloison plane de forme sensiblement triangulaire dont le sommet est relié à l'embase 43.

L'embase 43 comprend également deux brins 44 et 45 qui convergent l'un vers l'autre. Chaque brin 44 ou 45 s'étend de manière tangentielle au prolongement des extrémités de la portion en arc de cercle de l'élément d'aspect 50. En outre, chaque brin 44 ou 45 définit un bras de support apte à recevoir une coulisse 42 et un joint 41 à lèvres.

Le module 4 d'étanchéité comprend en outre un moyen de fixation situé au niveau du coin du module définit par la jonction d'éléments d'étanchéité 41 et 42 qui convergent l'un vers l'autre.

Ledit moyen de fixation est de préférence du type d'un insert 46 destiné à l'indexage et à la fixation dudit module sur la structure de porte, comme on le verra plus en détails par la suite.

De manière préférentielle, l'insert 46 est réalisé en matière plastique rigide selon un surmoulage de l'embase 43.

L'insert 46 comprend préférentiellement une entretoise 47 qui est destiné à s'étendre à l'intérieur du corps creux définit par la doublure 2 de porte et le cadre 3, plus précisément au niveau du coin supérieur de porte. La bissectrice au sommet délimité par le coin est de préférence confondue avec un axe le long duquel s'étend l'insert 46.

L'entretoise 47 est de préférence de section sensiblement cylindrique et comprend une face extérieure qui est radialement prolongée par une branche 49 de liaison à l'embase 43, comme cela est rendu visible sur la figure 4.

De façon préférentielle, la branche 49 est reliée à un sommet formant ledit coin, qui est défini par les extrémités des brins 44 et 45.

La face extérieure de l'entretoise 47 est destinée à s'étendre au prolongement de la tôle utilisée pour le cadre 3 afin de servir, comme celle-ci, de moyen de support sur laquelle vient en appui la coulisse 42.

L'entretoise 47 comprend en outre un fût 48 d'indexage qui s'étend en saillie hors de la face intérieure de l'entretoise. Le fût 48 est de forme sensiblement complémentaire à une ouverture 21 de fixation ménagée à cet effet sur la doublure 2 de porte et qui est rendue visible sur la figure 5.

Comme cela est représenté sur les doublures des portes avant 11 et arrière 12 de la figure 5, notamment leur coin supérieur destiné à recevoir l'insert 46, l'ouverture 21 est de préférence conformée selon un trou débouchant de forme sensiblement cylindrique.

Le fût 48 présente de préférence un diamètre inférieur à celui de l'entretoise 47, ce qui permet une mise en appui de la face intérieure de l'entretoise sur la doublure 2 de porte, notamment sur sa face extérieure.

L'insert 46 comprend un passage dédié à la fixation par vissage d'un élément d'aspect 51. Celui-ci est un enjoliveur destiné à recouvrir partiellement la doublure 2 de porte, ce qui le rend par conséquent visible sur le côté intérieur de la porte.

Cet enjoliveur qui, dans une position de fermeture de la porte, s'étend transversalement entre la doublure 2 de porte et la caisse 10 du véhicule, comprend à l'une de ses extrémités un crochet venant en prise avec une fente dédiée pratiquée sur l'embase 43.

Au niveau de son extrémité opposée, l'enjoliveur comprend une embase de fixation au travers de laquelle est ménagée une ouverture destinée au passage d'une vis 52 de fixation.

De manière avantageuse, lorsque l'insert 46 est indexé sur la doublure 2 de porte, le fût 48 dépasse de l'autre côté de la doublure 2 de porte. C'est ainsi que le fût 48 a également pour fonction de créer un moyen d'indexage permettant audit l'élément d'aspect 51 de se positionner par rapport au module 4 d'étanchéité. A cet effet, ledit élément d'aspect 51 comprend une collerette de forme sensiblement complémentaire au fût 48 qu'elle entoure lors de son indexage. L'élément d'aspect 51 est un enjoliveur réalisé en matière plastique et destiné à recouvrir partiellement la doublure 2 de porte.

L'embase de l'enjoliveur comprend, au niveau de sa face extérieure une collerette dont la fonction est d'assurer l'indexage de l'enjoliveur sur le fût 48. La profondeur de la collerette est supérieure au dépassement du fût 48 hors de la doublure 2, de sorte que le serrage de l'enjoliveur sur l'insert 46 garantit une qualité d'assemblage de l'enjoliveur, en d'autres termes permet une mise en appui de l'extrémité libre de l'enjoliveur sur la doublure 2 de porte.

L'élément d'aspect 51 comprend en outre un obturateur 53 qui vient se loger dans l'ouverture de passage de la vis 52. Un tel obturateur 53 est maintenu sur l'élément d'aspect 51 par l'intermédiaire d'un moyen de fixation rapide du type à clipage.

L'insert 46 est réalisé par un surmoulage de l'embase 43, de sorte que l'embase et l'insert ne forme une pièce réalisée d'un seul tenant. Il est donc facile d'améliorer les modules d'étanchéité existants par l'ajout d'une telle opération de surmoulage.

Bien entendu cela n'exclue en rien la possibilité de réaliser lors d'une même opération de moulage, l'embase 43 et l'insert 46.

Les éléments d'étanchéité, qu'il s'agisse des joints 41 d'étanchéité ou des coulisses 42, sont par la suite assemblées l'embase, au moyen des brins 44 et 45 prévu à cet effet.

Il s'en suit par la suite une opération de surmoulage visant à lier les éléments d'étanchéité entre eux ainsi qu'avec l'embase munie de l'insert de fixation.

Un module 4 d'étanchéité comprenant un tel moyen de fixation est remarquable en ce qu'il améliore la tenue dudit module de façon pérenne. En outre un tel module garantit un agencement de qualité avec un élément d'aspect, ce qui améliore substantiellement la qualité perçue de la porte 11 ou 12.

## Revendications

1. Module (4) d'étanchéité comprenant au moins un ensemble d'éléments d'étanchéité (41, 42) et un moyen de fixation dudit module (4) d'étanchéité situé au niveau d'un coin défini par la jonction de tout ou partie des éléments d'étanchéité (41, 42) convergeant l'un vers l'autre, **caractérisé en ce qu'**il comprend une embase (43) formant une partie dudit coin, et un insert (46) destiné à la fixation dudit module (4) d'étanchéité sur un support dédié, ledit insert (46) comprenant une entretoise (47) en saillie de laquelle s'étend axialement un fût (48) d'indexage par rapport audit support dédié et radialement une branche (49) reliant l'entretoise (47) à l'embase (43)

2. Module d'étanchéité selon la revendication 1, **caractérisé en ce que** le fût (48) est disposé sur une face de l'insert (47) à l'opposée de laquelle s'étend ladite branche (49).

3. Module d'étanchéité selon la revendication 1 ou 2, **caractérisé en ce que** le fût (48) est cylindrique et s'étend radialement en retrait par rapport au bord périphérique de l'entretoise (47).

4. Module d'étanchéité selon l'une quelconque des revendications 1 à 3, **caractérisé en ce qu'**il comprend au moins élément d'aspect (50, 51) relié à l'un ou à chacun des éléments (41, 42) d'étanchéité, l'élément d'aspect (51) étant relié à l'insert (46) au moyen d'une vis (52) de serrage s'étendant au travers d'une ouverture ménagée dans le fût (48) et l'entretoise (47)

5. Module d'étanchéité selon l'une quelconque des revendications 1 à 4, **caractérisé en ce que** l'embase (43) comprend deux brins (44, 45) convergeant l'un vers l'autre, et définissant un sommet à partir duquel s'étend l'insert (46).

6. Ensemble comprenant un module (4) d'étanchéité selon l'une quelconque des revendications 1 à 5 et une structure de porte (1, 11, 12) d'un véhicule, notamment d'une automobile, **caractérisé en ce que** ledit ensemble comprend au moins un ouvrant (5) fixe ou mobile par rapport à un encadrement d'ouvrant délimité par la structure de porte, ledit module (4) d'étanchéité comprenant au moins un joint (41) à lèvre apte à être disposée sur un bord périphérique de la porte (1) pour rendre hermétique ce dernier par rapport à la caisse (10) du véhicule, au moins une coulisse (42) apte à être montée sur tout ou partie dudit encadrement (20) d'ouvrant, et destinée à la fixation d'au moins un ouvrant (5) pour rendre hermétique chaque ouvrant par rapport audit encadrement (20), chaque joint (41) à lèvre et chaque coulisse (42) étant reliés à l'embase (43) fixée sur un support dédié du type d'une doublure (2) de porte.

7. Ensemble selon la revendication 6, **caractérisé en ce que** la structure de porte (1) comprend une doublure (2) de porte et un cadre (3) supérieur de porte, chacun délimitant tout ou partie d'un encadrement d'au moins un ouvrant, le cadre (3) supérieur étant superposé à la doublure (2) de porte de telle sorte que la face intérieure dudit cadre (3) supérieure est disposée sur la face extérieure de la doublure (2) de porte, ledit module (4) d'étanchéité étant fixé sur les feuillures de la doublure (2) de porte et du cadre (3) supérieur en recouvrant la face extérieure dudit cadre (3) supérieur.

8. Ensemble selon la revendication 6 ou 7, **caractérisé en ce que** la doublure (2) de porte comprend, au niveau d'une zone destinée à recevoir l'embase (43) délimitant un coin dudit module d'étanchéité (4), un trou (21) dans lequel s'étend le fût (48) du module (4) d'étanchéité.

9. Ensemble selon l'une quelconque des revendications 6 à 8, **caractérisé en ce que** l'entretoise (47) est en appui contre une face extérieure de la doublure (2) de porte et **en ce qu'**un élément d'aspect (51) est un enjoliveur rapporté et vissé sur l'entretoise (47), laquelle est en appui sur une face opposée de la doublure (2) de porte.

10. Véhicule, notamment du type d'une automobile, comportant une porte (1) montée articulée sur une caisse (10) du véhicule, **caractérisé en ce que** la porte (1) comprend un ensemble conforme à l'une quelconque des revendications 6 à 9.

## Patentansprüche

1. Abdichtmodul (4), das mindestens eine Baugruppe von Abdichtelementen (41, 42) sowie ein Mittel zum Befestigen des Abdichtmoduls (4), das sich im Bereich einer Ecke befindet, die durch die Verbindung aller oder eines Teils der Abdichtelemente (41, 42) definiert ist, die zueinander konvergieren, aufweist, **dadurch gekennzeichnet, dass** es einen Sockel (43) aufweist, der einen Teil der Ecke bildet, und einen Einsatz (46), der zum Befestigen des Abdichtmoduls (4) auf einem dazu bestimmten Träger bestimmt ist, wobei der Einsatz (46) einen vorstehenden Abstandhalter (47) aufweist, ab welchem sich axial ein Schaft (48) zum Positionieren in Bezug auf den dedizierten Träger und radial ein Schenkel (49), der den Abstandhalter (47) mit dem Sockel (43) verbindet, erstrecken.

2. Abdichtmodul nach Anspruch 1, **dadurch gekennzeichnet, dass** der Schaft (48) auf einer Seite des Einsatzes (47) angeordnet ist, welchem gegenüberliegend sich der Schenkel (49) erstreckt.

3. Abdichtmodul nach Anspruch 1 oder 2, **dadurch gekennzeichnet, dass** der Schaft (48) zylindrisch ist und sich radial im Rücksprung in Bezug auf den umfänglichen Rand des Abstandhalters (47) erstreckt.

4. Abdichtmodul nach einem der Ansprüche 1 bis 3, **dadurch gekennzeichnet, dass** es mindestens ein Dekorelement (50, 51) aufweist, das mit einem oder mit jedem der Abdichtelemente (41, 42) verbunden ist, wobei das Dekorelement (51) mit dem Einsatz (46) mittels einer Spannschraube (52) verbunden ist, die sich durch eine Öffnung erstreckt, die in dem Schaft (48) und dem Abstandhalter (47) eingerichtet ist.

5. Abdichtmodul nach einem der Ansprüche 1 bis 4, **dadurch gekennzeichnet, dass** der Sockel (43) zwei Stränge (44, 45) aufweist, die zueinander konvergieren und einen Scheitel definieren, von welchem ausgehend sich der Einsatz (46) erstreckt.

6. Baugruppe, die ein Abdichtmodul (4) nach einem der Ansprüche 1 bis 5 aufweist, sowie eine Türstruktur (1, 11, 12) eines Fahrzeugs, insbesondere eines Kraftfahrzeugs, **dadurch gekennzeichnet, dass** die Baugruppe mindestens eine in Bezug auf einen Türrahmen, der von der Türstruktur abgegrenzt wird, stationäre oder bewegliche Tür (5) aufweist, wobei das Abdichtmodul (4) mindestens eine Lippendichtung (41) aufweist, die geeignet ist, um auf einem umfänglichen Rand der Tür (1) angeordnet zu werden, um diese Letztere in Bezug auf die Karosserie (10) des Fahrzeugs hermetisch dicht zu machen, mindestens eine Gleitführung (42), die auf den ganzen oder einen Teil der Türrahmens (20) montiert werden kann und zum Befestigen mindestens einer Tür (5) bestimmt ist, um jede Tür in Bezug auf den Rahmen (20) hermetisch dicht zu machen, wobei jede Lippendichtung (41) und jede Gleitführung (42) mit dem Sockel (43), der auf einem dedizierten Träger des Typs einer Türauskleidung (2) befestigt ist, verbunden ist.

7. Baugruppe nach Anspruch 6, **dadurch gekennzeichnet, dass** die Türstruktur (1) eine Türauskleidung (2) und einen oberen Türrahmen (3) aufweist, die jeweils den ganzen oder einen Teil eines Rahmens mindestens einer Tür abgrenzen, wobei der obere Rahmen (3) der Türauskleidung (2) derart überlagert ist, dass die Innenseite des oberen Rahmens (3) auf der Außenseite der Türauskleidung (2) angeordnet ist, wobei das Abdichtmodul (4) auf den Falzen der Türauskleidung (2) und des oberen Rahmens (3) unter Abdecken der Außenseite des oberen Rahmens (3) befestigt ist.

8. Baugruppe nach Anspruch 6 oder 7, **dadurch gekennzeichnet, dass** die Türauskleidung (2) im Bereich einer Zone, die dazu bestimmt ist, den Sockel (43), der eine Ecke des Abdichtmoduls (4) abgrenzt, aufzunehmen, eine Öffnung (21) aufweist, in der sich der Schaft (48) des Abdichtmoduls (4) erstreckt.

9. Baugruppe nach einem der Ansprüche 6 bis 8, **dadurch gekennzeichnet, dass** der Abstandhalter (47) gegen eine äußere Seite der Türauskleidung (2) anliegt, und dass das Dekorelement (51) eine Zierleiste ist, die auf den Abstandhalter (47), der auf einer Seite gegenüber der Türauskleidung (2) aufliegt, angebaut und geschraubt ist.

10. Fahrzeug, insbesondere des Typs Kraftfahrzeug, das eine Tür (1) aufweist, die auf einer Karosserie (10) des Fahrzeugs angelenkt installiert ist, **dadurch gekennzeichnet, dass** die Tür (1) eine Baugruppe gemäß einem der Ansprüche 6 bis 9 aufweist.

## Claims

1. A sealing module (4) including at least one sealing element assembly (41, 42) and a means for attaching the said sealing module (4) situated at the level of a corner defined by the junction of all or a portion of the sealing elements (41, 42) converging toward one another, **characterized in that** it includes a base (43) forming a part of the said corner, and an insert (46) intended for the attaching of the said sealing module (4) on a dedicated support, the said insert (46) including a spacer (47) projecting from which there extends axially an indexing drum (48) with respect to the said dedicated support and radially a branch (49) connecting the spacer (47) to the base (43).

2. The sealing module according to Claim 1, **characterized in that** the drum (48) is disposed on a face of the insert (47) opposite to which the said branch (49) extends.

3. The sealing module according to Claim 1 or 2, **characterized in that** the drum (48) is cylindrical and extends radially back with respect to the peripheral edge of the spacer (47).

4. The sealing module according to any one of Claims 1 to 3, **characterized in that** it includes at least one trim element (50, 51) connected to one or to each of the sealing elements (41, 42), the trim element (51) being connected to the insert (46) by means of a tightening screw (52) extending through an opening arranged in the drum (48) and the spacer (47).

5. The sealing module according to any one of Claims 1 to 4, **characterized in that** the base (43) includes two strands (44, 45) converging toward each other, and defining an apex from which the insert (46) extends.

6. An assembly including a sealing module (4) according to any one of Claims 1 to 5 and a door structure (1, 11, 12) of a vehicle, in particular of a motor vehicle, **characterized in that** the said assembly includes at least one opening panel (5) fixed or movable with respect to an opening panel surround delimited by the door structure, the said sealing module (4) including at least one lip seal (41) able to be disposed on a peripheral edge of the door (1) to render the latter hermetic with respect to the body (10) of the vehicle, at least one slide (42) able to be mounted on all or part of the said opening panel surround (20), and intended for the fixing of at least one opening panel (5) to render each opening panel hermetic with respect to the said surround (20), each lip seal (41) and each slide (42) being connected to the base (43) fixed on a dedicated support of the door lining type (2).

7. The assembly according to Claim 6, **characterized in that** the door structure (1) includes a door lining (2) and an upper door frame (3), each delimiting all or part of a surround of at least one opening panel, the upper frame (3) being superimposed on the door lining (2) such that the interior face of the said upper frame (3) is disposed on the exterior face of the door lining (2), the said sealing module (4) being fixed on the rabbets of the door lining (2) and of the upper frame (3), covering the exterior face of the said upper frame (3).

8. The assembly according to Claim 6 or 7, **characterized in that** the door lining (2) includes, at the level of a zone intended to receive the base (43) delimiting a corner of the said sealing module (4), a hole (21) in which the barrel (48) of the sealing module (4) extends.

9. The assembly according to any one of Claims 6 to 8, **characterized in that** the spacer (47) rests against an exterior face of the door lining (2) and **in that** a trim element (51) is an embellishment added and screwed to the spacer (47), which rests on an opposite face of the door lining (2).

10. A vehicle, in particular of the motor vehicle type, comprising a door (1) mounted so as to be articulated on a body (10) of the vehicle, **characterized in that** the door (1) includes an assembly according to any one of Claims 6 to 9.
